Europäisches Patentamt

European Patent Office

Office européen des brevets

(19)

(11) Veröffentlichungsnummer: **0 006 549**
**B1**

(12) **EUROPÄISCHE PATENTSCHRIFT**

(45) Veröffentlichungstag der Patentschrift: **19.05.82**

(21) Anmeldenummer: **79101960.7**

(22) Anmeldetag: **15.06.79**

(51) Int. Cl.³: **C 08 L 77/00,**
**C 08 L 67/00, C 08 L 75/04,**
**C 08 L 69/00, C 08 L 23/00,**
**C 08 L 25/04, C 08 L 27/00,**
**C 08 L 33/02, C 08 K 3/02,**
**C 08 K 5/09**

(54) **Stabilisierte, flammgeschützte, thermoplastische Formmassen.**

(30) Priorität: **24.06.78 DE 2827760**

(43) Veröffentlichungstag der Anmeldung:
**09.01.80 Patentblatt 80/1**

(45) Bekanntmachung des Hinweises auf die Patenterteilung:
**19.05.82 Patentblatt 82/20**

(84) Benannte Vertragsstaaten:
**BE CH DE FR GB IT NL**

(56) Entgegenhaltungen:
**DE - A - 2 355 211**
**DE - A - 2 534 793**
**DE - A - 2 625 691**
**DE - A - 2 703 052**
**DE - B - 1 931 387**
**FR - A - 2 314 219**
**US - A - 3 806 488**
**US - A - 3 847 861**

(73) Patentinhaber: **BASF Aktiengesellschaft**
**Carl-Bosch-Strasse 38**
**D-6700 Ludwigshafen (DE)**

(72) Erfinder: **Seiler, Erhard, Dr.-Chem.**
**Erpolzheimer Strasse 1**
**D-6700 Ludwigshafen (DE)**
Erfinder: **Cordes, Claus, Dr.-Chem.**
**Halbergstrasse 13**
**D-6719 Weisenheim (DE)**
Erfinder: **Boehlke, Klaus, Dr.-Chem.**
**Gerhart-Hauptmann-Strasse 53**
**D-6711 Hessheim (DE)**
Erfinder: **Theysohn, Rainer, Dr.-Chem.**
**Brüsseler Ring 38**
**D-6700 Ludwigshafen (DE)**

Courier Press, Leamington Spa, England.

**0 006 549**

Stabilisierte, flammgeschützte, thermoplastische Formmassen

Die Erfindung betrifft mit rotem Phosphor flammfest ausgerüstete thermoplastische Formmassen, die als Stabilisatoren gegen Thermooxidative Zersetzung des roten Phosphors ein Salz eines zwei- oder dreiwertigen Metalls mit einem carboxylgruppenhaltigen Polymeren enthalten.

Es ist bekannt, daß der Zusatz von rotem Phosphor zu thermoplastischen Kunststoffen, vor allem zu verstärkten oder gefüllten Polyamiden, zu einem wirksamen Brandschutz führt (DE—B— 19 31 387). Roter Phosphor neigt jedoch unter ungünstigen Bedingungen, wie z.B. erhöhte Temperatur, Feuchtigkeit, Gegenwart von Alkali oder Sauerstoff, zur Bildung von Zersetzungsprodukten, wie Phosphin und Säuren des 1- bis 5-wertigen Phosphors. In thermoplastische Kunststoffe, z.B. Polyamide, eingearbeiteter roter Phosphor ist zwar infolge der Einbettung in das Polymere gegen Thermooxidation weitgehend geschützt, es kann jedoch auch hier längerfristig zur Bildung von Zersetzungsprodukten kommen. Dies ist isofern von Nachteil, als das z.B. bei der Verarbeitung von Granulaten im Spritzgußverfahren sich bildende Phosphin zu Geruchsbelästigungen führen kann und zudem toxisch ist; die gleichzeitig entstehenden Säuren des Phosphors können sich an der Oberfläche von Spritzgußteilen ausscheiden, wodurch vor allem die Kriechstromfestigkeit der Formteile herabgesetzt wird.

Es hat daher nicht an Versuchen gefehlt, die Stabilität des als Flammschutzmittel für Kunststoffe eingesetzten roten Phosphors zu verbessern. So kann eine gewisse stabilisierende Wirkung durch Zugabe von Oxiden oder — Hydroxiden des Zinks, Magnesiums oder Kupfers erreicht werden. Nach der DE—B—26 25 691 werden zusätzlich zu dieser Stabilisierung durch Metalloxide die Phosphorteilchen mit einem Polymerisat umhüllt, welches neben anderen auch ein Polymerisat auf Basis von Acrylsäure oder Acrylaten sein kann. Dieses Umhüllungs- oder Verkapselungsverfahren ist jedoch recht aufwendig, außerdem ist die Stabilisierende Wirkung des Systems nicht in allen Fällen befriedigend.

Der Erfingung lag daher die Aufgabe zugrunde, thermoplastische Formmassen zu entwickeln, die einen wirksam stabilisierten roten Phosphor als Flammschutzmittel enthalten. Die Stabilisatoren sollen sich außerdem durch gute Beständigkeit bei den Verarbeitungstemperaturen der Formmassen und durch eine besonders homogene Verteilbarkeit in der Kunststoffschmelze auszeichnen.

Diese Aufgabe wird gelöst, wenn die Formmassen als Stabilisator 0,1 bis 50 Gew.%, bezogen auf Phosphor, eines Salzes einer zwei- oder dreiwertigen Metalls mit einem carboxylgruppenhaltigen Polymeren enthalten.

Die flammfest auszurüstenden thermoplastischen Kunststoffe sind vorzugsweise Polykondensate oder Polyaddukte. Dabei kommen insbesondere in Frage:

1. Polyamide, vorzugsweise gesättigte lineare Homopolyamide, wie z.B. Polycaprolactam (Polyamid-6), Polyhexamethylenadipinsäureamid (Polyamid-6,6), Polyhexymethylensebazinsäureamid, Polylaurinlactam, Polyundecanamid; ferner Homo- und Copolyamide, die unter Verwendung von Adipinsäure, Acelainsäure, Sebazinsäure, Dodecandisäure, Terephthalsäure einerseits und Hexamethylendiamin, Trimethylhexamethylendiamin, Bis-(4-aminocyclohexyl)- methan, 2,2-Bis-(4-aminocyclohexyl)-propan andererseits hergestellt werden; sowie Copolyamide, die durch Polykondensation von Lactamen zusammen mit den oben genannten Dicarbonsäuren und Diaminen erhalten werden.

2. Polyester, insbesondere lineare thermoplastische Polyester aus aromatischen oder aliphatischen Carbonsäuren, wie Terephthal-, Isophthal-, Phthal, oder Adipinsäure einerseits und Glykolen, wie Äthylen-, Propylen-, Butylen- oder Neopentylglykol andererseits, wobei Polybutylenterephthalat und Polyäthylenterephthalat bevorzugt sind.

3. Polyurethane, insbesondere lineare thermoplastische polyurethane aus aromatischen oder aliphatischen Diisocyanaten, wie Diphenylmethandiisocyanat oder Hexamethylendiisocyanat und hydroxylgruppenhaltigen Polyestern oder Polyäthern, sowie gegebenenfalls Diolen, wie Butandiol, als Kettenverlängerungsmittel.

4. Polycarbonate aus Phosgen und Dioxydiphenylalkanen, vorzugsweise Dioxydiphenylpropan.

5. Daneben auch Polymerisate wie Polyolefine, Styrolpolymerisate, Polyvinylharze und Polyacrylharze.

Die erfindungsgemäß verwendeten Stabilisatoren sind Salze eines zwie- oder dreiwertigen Metalls mit einem carboxylgruppenhaltigen Polymeren, welche hergestellt wurden durch Zusatz einer Metallverbindung zu einer wäßrigen Lösung eines carboxylgruppenhaltigen Polymeren.

Das carboxylgruppenhaltige Polymere kann z.B. ein Homo-oder Copolymerisat der Acrylsäure oder der Methacrylsäure sein, wobei als Comonomere olefinisch ungesättigte Verbindungen, wie Vinyl-oder Acrylverbindungen in Frage kommen. Es kann auch ein Copolymerisat des Maleinsäureanhydrids sein, z.B. mit $\alpha$-Olefinen, Vinyläthern oder Styrol, wobei die Anhydridgruppen zumindest teilweise zu Carboxylgruppen verseift sein müssen.

Als Metalle kommen vorzugsweise Aluminium, Magnesium, Zink, Calcium, Zinn, Blei und Antimon in Frage.

Die Stabilisatoren werden hergestellt durch Zusatz einer Metallverbindung zu einer wäßrigen Lösung des carboxylgruppenhaltigen Polymeren, wobie das Salz ausgefällt wird. Diese Hertsellungsweise setzt voraus, daß das carboxylgruppenhaltige Polymere wasserlöslich ist, wobei diese Wasserlöslichkeit auch durch Zusatz von Alkali bzw. durch Verwendung von Alkali- oder Ammoniumsalzen er-

2

**0 006 549**

reicht werden kann. Der Gehalt des carboxylgruppenhaltigen Polymeren an carboxylgruppentragenden Monomerbausteinen soll so groß sein, daß die Wasserlöslichkeit des Polymeren bzw. des entsprechenden Alkali- oder Ammoniumsalzes gewährleistet ist. Zweckmäßigerweise setzt man daher Copolymere ein, die mindestens 10 Molprozent Acrylsäure bzw. Methacrylsäure einpolymerisiert enthalten. Bei Maleinsäureanhydrid-Copolymerisaten sind solche mit alternierendem Aufbau besonders leicht zugänglich.

Andererseits braucht die Metallverbindung, die zum Ausfällen zugesetzt wird, nicht unbedingt als wäßrige Lösung vorliegen, man kann z.B. auch Aufschlämmungen von wasserunlöslichen Verbindungen zusetzen, sofern damit ein Ausfällen erreicht werden kann. Die Metalle können z.B. in Form von Sulfaten, Halogeniden oder Phosphaten vorliegen, bevorzugt sind Carbonate, Hydroxide oder Oxide, da hier keine eventuell störenden Anionen in das System eingeführt werden. Es sind aber auch Salze organischer Säuren oder Komplexverbindungen verwendbar.

Die eingesetzten Mengen an Stabilisator, bezogen auf roten Phosphor, betragen 0,1 bis 50 Gew.%, vorzugsweise 1 bis 10 Gew.%. Die Stabilisatoren können mit dem roten Phosphor mechanisch abgemischt werden, bevorzugt werden sie aber bei ihrer Herstellung in Gegenwart einer Phosphoraufschlämmung auf die Phosphorteilchen aufgefällt. Natürlich ist es auch möglich, die Stabilisatoren während der Einarbeitung des Phosphors in dem Kunststoff direkt in die Schmelze zuzugegen. In einer ganz besonders bevorzugten Ausführungsform wird zunächst eine wäßrige Suspension des Phosphors mit dem gelösten Polymeren in Wechselwirkung gebracht, dann wird dieses durch Zusatz der Metallverbindung ausgefällt. Dabei ist es im allgemainen gar nicht erforderlich, die äquivalente Menge an Metallionen zuzusetzen, da das Salz des carboxylgruppenhaltigen Polymeren meist schon von der Stöchiometrischen Absättigung der Carboxylgruppen mit Metallionen ausfällt. Man erhält bei dieser Ausführungsform einen besonders gut stabilisierten und phlegmatisierten Phosphor, der sich gefahrlos und einfach in der Kunststoffschmelze einarbeiten läßt.

Zur Brandschutzausrüstung wird der rote Phosphor vorzugsweise in Mengen von 1 bis 12 Gew.%, insbesondere von 3 bis 7 Gew.%, bezogen auf die gesamte Formmasse, eingesetzt. Er kann in handelsüblichen, auch bereits anderweitig vorstabilisierten Qualitäten verwendet werden. Die mittlere Größe der im Kunststoff verteilten Phosphorpartikel soll bevorzugt zwischen 0,0001 und 0,5 mm, insbesondere zwischen 0,001 und 0,2 mm Durchmesser liegen.

Als Füllstoffe kommen Glasfasern, vorzugsweise solche aus E-Glas, die mit einer Schlichte und einem Haftvermittler ausgerüstet sein können, in Mengen von 10 bis 60 Gew.%, bezogen auf die gesamte Formmasse, in Frage. Die Fasern können einen Durchmesser zwischen 8 und 20 $\mu$m aufweisen, die mittlere Glasfaserlänge im Spritzgußteil liegt vorzugsweise zwischen 0,1 und 0,5 mm. Als weitere Füllstoffe kommen Schichtsilikate, wie Talkum und Glimmer in Betracht, wobei der mittlere Plättchendurchmesser 5—200 $\mu$m, die mittlere Plättchendicke 0,01 bis 10 $\mu$m betragen kann. Weitere geeignete Füllstoffe sind Glaskugeln, Wollastonit, Asbest, Kaolin, Quarz und Kreide.

Die erfindungsgemäßen Formmassen können ferner die üblichen Zusätze, wie Farbstoffe, Stabilisatoren, Gleitmittel Und Verarbeitungshilfsmittel enthalten.

Zur Herstellung der erfindungsgemäßen Mischungen werden roter Phosphor und gegebenenfalls Füllstoffe nach bekannten Methoden auf Extrudern oder anderen geeigneten Knetund Mischvorrichtungen in die Kunststoff-Schmelze eingearbeitet, wie es z.B. in der US—Patentschrift 3 304 282 beschrieben ist. Die Phosphorstabilisatoren können hierbei direkt in die Schmelze zugegeben werden, sie können aber auch vor der Einarbeitung auf Kunststoffgranulat aufgebracht werden, bevorzugt gelangen sie jedoch mit rotem Phosphor zuvor abgemischt oder aufgefällt zum Einsatz.

Um die Wirksamkeit der Phosphorstabilisatoren zu prüfen, wurden aus den gewonnenen Granulaten Formkörper mit definierter Oberfläche spritzgegossen, an denen die Phosphinentwicklung über einen längeren Zeitraum gemessen wurde.

Beispiele

A. Stabilisierung des Phosphors

*Ansatz 1*

Ein Copolymer aus 30 Molprozent Acrylsäure und 70 Molprozent Acrylamid mit einem K-Wert von 190 (nach Fikentscher, Cellulosechemie *13*, 1932, S. 58, gemessen 0,1 %ig in 5 %iger Natriumchlorid-Lösung) wurde als Natriumsalz 1 %ig unter Rühren in Wasser gelöst. 260 ml dieser Lösung wurden einer Suspension von 100 g rotem Phosphor in 1 000 ml Wasser zugesetzt und vermischt. Dann wurden 0,45 g $AlCl_3$ in Form einer wäßrigen Lösung zugegeben. Nach Durchmischung wurde eine sehr gut absitzende und filtrierbare Suspension erhalten. Im Filtrat konnten keine Aluminiumionen und kein Polymeres nachgewiesen werden. Der Filterkuchen wurde mit Wasser chloridfrei gewaschen, mit Aceton gespült und getrocknet.

*Ansatz 2*

Zu einer wäßrigen Suspension von 100 g rotem Phosphor in 1 000 ml Wasser wurden 40 ml einer 20 %igen wäßrigen Polyacrylsäure-Lösung mit K-Wert 53 (1 %ig in Wasser) zugemischt. Anschließend wurden 4 g $CaCO_3$ eingetragen und 2 Stunden gerührt. Die Suspension wurde filtriert und der Filterkuchen getrocknet.

3

# 0 006 549

*Ansatz 3*

2 g eines alternierenden Copolymerisats aus Maleinsäure-anhydrid und Diisobutylen wurden in Wasser mit 0,75 g NaOH verseift und in Lösung gebracht. Aus der so erhaltenen Lösung des Natriumsalzes des Polymeren wurden mit 50 g rotem Phosphor eine Suspension in 500 ml Wasser hergestellt. In dieser Suspension wurde unter Rühren eine wäßrige Lösung von 1,3 g $ZnCl_2$ gegeben. Die Suspension wurde filtriert und der Filterkuchen mit Wasser chloridfrei gewaschen und getrocknet.

## B. Einarbeitung in Kunststoff

Polyamid-6,6 mit einem K-Wert von 72 wurde auf einem Zweiwellenextruder beinTemperaturen von 280°C aufgeschmolzen. Glasfasern in Form von 6 mm langen Schnittglasfasern, und mit Stabilisator versehener roter Phosphor wurden über eine Öffnung, die sich stromabwärts befindet, zugegeben. Die Menge der eingearbeiteten Glasfasern betrug 35 Gew.%, die des stabilisierten roten Phosphors 6 Gew.%, jeweils bezogen auf die Gesamtmenge.

Die Mischung wurde durch Düsen ausgepreßt, als Stränge abgezogen und nach dem Abkühlen granuliert.

## C. Prüfung der Stabilisatoreinwirkung

Aus den Granulaten wurden Normkleinstäbe in den Abmessungen 4 x 6 x 50 mm spritzgegossen. Jeweils 100 dieser Normkleinstäbe wurden im spritzfrischen Zustand in einen gasdichten Glaskolben gegeben und 5 Gew.% destilliertes Wasser, bezogen auf die Gesamtmasse der Formkörper hinzugefügt, der Kolben mit Sauerstoff gespült und dann auf 0,6 bar evakuiert. Die sich im Kolben bildende Menge an Phosphin wurde nach jeweils 20, 40 und 60 Tagen mittels Drägerröhrchen (Typ Phosphorwasserstoff 50/a der Firma Drägerwerke AG, Lübeck) bestimmt. Nach jeder Messung wurde der Kolben zuerst mit Stickstoff, dann mit Sauerstoff gespült und wieder auf 0,6 bar evakuiert. Die Summe der nach 20, 40 und 60 Tagen gemessenen Phosphingehalte diente als Richtwert für die Beurteilung der Wirksamkeit des Verwendeten Phosphorstabilisators. Ergebnis siehe Tabelle

### TABELLE:

| Phosphorstabilisierung nach Ansatz | Phosphingehalt in ppm nach Lagerzeit in Tagen | | |
|---|---|---|---|
| | 20 | 40 | 60 |
| 1 | 150 | 310 | 540 |
| 2 | 140 | 270 | 440 |
| 3 | 120 | 200 | 310 |
| unstabilisiert | 200 | 450 | 700 |

## Patentansprüche

1. Formmassen aus thermoplastischen Kunststoffen, die roten Phosphor als Flammschutzmittel sowie 0,1 bis 50 Gew.%, bezogen auf Phosphor, eines Stabilisators enthalten dadurch gekennzeichnet, daß der Stabilisator ein Salz eines zwei- oder driewertigen Metalls mit einem carboxylgruppenhaltigen Polymeren ist, welches hergestellt wurde durch Zusatz einer Metallverbindung zu einer wäßrigen Lösung eines carboxygruppenhaltigen Polymeren.

2. Formmassen nach Anspruch 1, dadurch gekennzeichnet, daß das carboxylgruppenhaltige Polymere eine Homo- oder Copolymerisat der Acrylsäure oder Methacrylsäure ist.

3. Formmassen nach Anspruch 1, dadurch gekennzeichnet, daß das carboxylgruppenhaltige Polymere ein Copolymerisat des Maleinsäureanhydrids mit teilweise oder vollständig verseiften Anhydridgruppen ist.

4. Formmassen nach Anspruch 1, dadurch gekennzeichnet, daß das Metall Aluminium, magnesium, Zink, Calcium, Zinn, blei oder Antimon ist.

5. Formmassen nach Anspruch 1, dadurch gekennzeichnet, daß der Stabilisator hergestellt wurde durch Ausfällen in Gegenwart des roten Phosphors.

6. Formmassen nach Anspruch 1, dadurch gekennzeichnet, daß der thermoplastische Kunststoff ein Polykondensations-oder Polyadditionsprodukt ist.

7. Formmassen nach Anspruch 6, dadurch gekennzeichnet, daß der thermoplastische Kunststoff ein Polyamid-6 oder ein Polyamid-6,6 ist.

8. Formmassen nach Anspruch 1, dadurch gekennzeichnet, daß sie roten Phosphor in Mengen von 1 bis 12 Gew.% enthalten.

9. Formmassen nach Anspruch 1, dadurch gekennzeichnet, daß sie Füllstoffe in Mengen von 10 bis 60 Gew.%, bezogen auf die gesamte Formmasse, enthalten.

4

10. Formmassen nach Anspruch 9, dadurch gekennzeichnet, daß sie als Füllstoffe Glasfasern enthalten.

11. Formmassen nach Anspruch 9, dadruch gekennzeichnet, daß sie als Füllstoffe Talkum, Glimmer oder Kaolin enthalten.

## Claims

1. A moulding composition consisting of a thermoplastic which contains red phosphorus as flame retardant and 0.1 to 50% by weight, based on phosphorus, of a stabilizer, characterized in that the stabilizer is a divalent or trivalent metal salt of a carboxyl-containing polymer which has been obtained by adding a metal compound to an aqueous solution of a carboxyl-containing polymer.

2. A moulding composition as claimed in claim 1, characterized in that the carboxyl-containing polymer is a homopolymer of copolymer of acrylic or methacylic acid.

3. A moulding composition as claimed in claim 1, characterized in that the carboxyl-containing polymer is a copolymer of maleic anhydride having partially or completely saponified anhydride groups.

4. A noulding composition as claimed in claim 1, characterized in that the metal is aluminium, magnesium, zinc, calcium, tin, lead or antimony.

5. A moulding composition as claimed in claim 1, characterized in that the stabilizer has been obtained by precipitation in the presence of red phosphorus.

6. A moulding composition as claimed in claim 1, characterized in that the thermoplastic if a polycondensation of polyaddition product.

7. A moulding composition as claimed in claim 6, characterized in that the thermoplastic is a nylon 6 of nylon 6,6.

8. A moulding composition as claimed in claim 1, characterized in that it contains from 1 to 12% by weight of red phosphorus.

9. A moulding composition as claimed in claim 1, characterized in that it contains from 10 to 60% by weight, based on the total moulding composition, of fillers.

10. A moulding composition as claimed in claim 9, characterized in that it contains glass fibres as filler.

11. A moulding composition as claimed in claim 9, characterized in that it contains talc, mica or kaolin as filler.

## Revendications

1. Matières à mouler en matières thermoplastiques qui contiennent du phosphore rouge comme agent de protection contre les flammes ainsi que 0,1 à 50 % en poids, rapportés au phosphore, d'un stabilisateur, caractérisées par le fait que le stabilisateur est un sel de métal bi- ou trivalent avec un polymère à groupes carboxyle, qui a été préparé par addition d'un composé metallique à une solution aqueuse d'un polymère à groupes carboxyle.

2. Matières à mouler selon la revendication 1, caractérisées par le fait que la polymère à groupes carboxyle est un homo-ou copolymérisat d'acide acrylique ou méthacrylique.

3. Matières à mouler selon la revendication 1, caractérisées par le fait que le polymére à groupes caboxyle est un copolymérisat d'anhydride d'acide maléique à groupes anhydride partiellement ou totalement saponifiés.

4. Matières à mouler selon la revendication 1, caractérisées par le fait que le métal est de l'aluminium, magnésium, zinc, calcium, étain, plomb ou antimoine.

5. Matières à mouler selon la revendication 1, caractérisées par le fait que la stabilisateur a été préparé par précipitation en présence du phosphore rouge.

6. Matières à mouler selon la revendication 1, caractérisées par le fait que la matière thermoplastique est un produit de polycondensation ou polyaddition.

7. Matières à mouler selon la revendication 6, caractérisées par le fait que la matière thermoplastique est un polyamide-6 ou un polyamide-6,6,.

8. Matières à mouler selon la revendication 1, caractérisées par le fait qu'elles contiennent du phosphore rouge en proportions de 1 à 12 % en poids.

9. Matières à mouler selon la revendication 1, caractérisées par le fait qu'elles contiennent des charges en proportions de 10 à 60 % en poids rapportées à toute la matière à mouler.

10. Matières à mouler selon la revendication 9, caractérisées par le fait qu'elles contiennent, comme charges, des fibres de verre.

11. Matières à mouler selon la revendication 9, caractérisées par le fait qu'elles contiennent, comme charges, du talc, mica ou kaolin.